# EUROPÄISCHE PATENTSCHRIFT

(11) **EP 2 826 355 B1**
(45) Veröffentlichungstag und Bekanntmachung des Hinweises auf die Patenterteilung: **27.04.2016**
(21) Anmeldenummer: 13176766.7
(22) Anmeldetag: 17.07.2013
(51) Int. Cl.: A01C 23/04

(54) **Andockelement**
Docking element
Élément de liaison

(43) Veröffentlichungstag der Anmeldung: 21.01.2015
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- WO-A1-2007/085032
- DE-A1- 19 624 189
- DE-U1- 20 019 918
- DE-U1- 29 723 192
- DE-U1-202005 006 922
- GB-A- 2 115 509

## Beschreibung

Die vorliegende Erfindung betrifft ein Andockelement aus einem gummielastischen Werkstoff mit einem trichterförmigen Abschnitt und einem zylinderförmigen Abschnitt zur Herstellung einer lösbaren Leitungsverbindung.

Ein gattungsgemäßes Andockelement ist beispielsweise aus dem deutschen Geschmacksmuster DE 40 406 319 bekannt. Das Andockelement besteht aus einem trichterförmigen und einem zylinderförmigen Abschnitt. Der zylinderförmige Abschnitt ist an einem Leitungsende ausgebildet oder an diesem befestigt, und weist einen Faltenbalg auf. Dem zylinderförmigen Abschnitt folgt der trichterförmige Abschnitt, in den ein mit dem Trichter korrespondierendes, in der Regel sphärisch ausgebildetes Andockelement, insbesondere eine am Ende einer Rohrleitung ausgebildete Saugkugel, eingeführt wird.

Mit derartigen Andockelement-Kombinationen lassen schnell und einfach lösbare Leitungsverbindungen herstellen. Diese Leitungsverbindungen dienen zum Umfüllen von fließfähigen Medien, insbesondere von Gülle. Das Umfüllen wird in der Regel durch das Anlegen von Vakuum mittels Extruder-, Saug- oder Verdrängerpumpe bewerkstelligt, wobei das fließfähige Medium, insbesondere Gülle, aus einem Vorratsbehälter abgesaugt wird. Die Vorratsbehälter können stationär, beispielsweise als Güllegrube oder mobil, beispielsweise als Gülletank auf einem Zu- oder Ausbringfahrzeug, ausgebildet sein. Naturgemäß müssen genannte Leitungsverbindungen hohen Ansprüchen genügen. Insbesondere sollten sie mechanisch stabil, verschmutzungsunempfindlich und gasdicht sein.

Aus der DE 196 24 189 A1 ist eine Vorrichtung zum Umfüllen von fließfähigen Medien, insbesondere von Gülle, zwischen zwei Behältern bekannt, wobei die Behälter durch Leitungen miteinander verbindbar sind und die Verbindung durch Andockelemente erfolgt. Die Andockelemente bestehen aus wenigstens zwei Elementen, von denen eines trichterförmig ausgebildet ist, und das andere Andockelement diesem trichterförmigen Andockelement formschlüssig derart angepasst ist, dass die Andockelemente gasdicht miteinander korrespondieren. Das trichterförmige Andockelement dient zur Aufnahme eines Gegenstückes, das durch ein weiteres Andockelement, insbesondere eine Saugkugel, gebildet wird, welche sich am freien Ende einer Rohrleitung befindet. Beim Einführen der Saugkugel in das trichterförmige Andockelement kann sich dieses aufgrund eines elastischen Faltenbalges der Position und der Ausrichtung der Saugkugel in axialer, radialer und winkelmäßiger Richtung anpassen.

Demnach sind gattungsgemäße trichterförmige Andockelemente aufgrund des elastischen Faltenbalges hinsichtlich eines axialen, jedoch in geringerem Maße hinsichtlich einer radialen und winkelmäßigen Fehlpositionierung eines sphärischen Andockelementes, fehlertolerant.

Eine korrekte Positionierung der beiden Andockelemente hinsichtlich einer axialer und insbesondere hinsichtlich einer radialen und winkelmäßigen Position ist jedoch bei einem bestimmungsgemäßen Einsatz der Leitungsverbindung, insbesondere wegen der üblichen Bodenunebenheiten, oft nicht möglich. Die Folge können undichte Leitungsverbindungen sein, die eine erhöhte Pumpleistung und/oder eine verminderte Förderleistung nach sich ziehen. Dies gilt es zu vermeiden.

Aufgabe der vorliegenden Erfindung ist es die Nachteile des Standes der Technik zu vermeiden, und ein Andockelement bereitzustellen, das insbesondere hinsichtlich einer radialen und winkelmäßigen Fehlpositionierung der Saugkugel (Saugrüssel) größere Fehlertoleranzen aufweist.

Erfindungsgemäß wird die genannte Aufgabe von einem Andockelement der eingangs genannten Gattung durch die kennzeichnenden Merkmale des Anspruchs 1 gelöst. Vorteilhafte Aus- und Weiterbildungen sind in den abhängigen Ansprüchen angegeben.

Die Erfindung baut auf einem gattungsgemäßen Andockelement dadurch auf, dass zumindest eine Falte des Faltenbalges eine Materialschwächung und/oder einen im Vergleich zu der zumindest einen andern Falte größeren Radius (Radius des Faltenbergs) aufweist.

Durch die Materialschwächung und/oder des im Vergleich zu der oder den andern Falte(n) größeren Radius des Faltenbergs einer Falte kann die radiale und winkelmäßige Beweglichkeit des Andockelements erhöht werden. Zudem zeigt das erfindungsgemäße Andockelement auch optimale axiale Beweglichkeit.

Die radiale und winkelmäßige Beweglichkeit nimmt mit dem Abstand der Material-schwächung und/oder der Falte mit dem größten Radius vom Trichterboden aus gesehen zu. Daher ist es bevorzugt ausgehend vom Trichterboden zunächst zumindest eine Falte zur Sicherstellung der axialen Beweglichkeit und nachfolgend zumindest eine Falte zur Sicherstellung einer verbesserten radialen und winkelmäßigen Beweglichkeit auszubilden.

In einer bevorzugten Ausführungsform weist das Andockelement einen zylinderförmigen Teilabschnitt mit einen Faltenbalg mit zumindest drei Falten auf, wobei die am weitesten vom trichterförmigen Abschnitt (Trichterboden) beabstandete Falte einen im Vergleich zu den beiden anderen Falten größeren Radius hinsichtlich des Faltenbergs aufweist. Zusätzlich kann die Falte eine Materialschwächung, beispielsweise durch eine verminderte Wandstärke, aufweisen.

In einer weiteren bevorzugten Ausführungsform weist das Andockelement einen zylinderförmigen Teilabschnitt mit einen Faltenbalg mit zumindest drei Falten auf, wobei die am weitesten vom trichterförmigen Abschnitt (Trichterboden) beabstandete Falte im Vergleich zu den beiden anderen Falten eine Materialschwächung, beispielsweise durch eine verminderte Wandstärke, aufweist.

Beste Ergebnisse im Hinblick auf die Einsatzdauer und die Elastizität des gummi-elastischen Werkstoffs werden mit Polyurethan mit einer Shore-Härte > 80 Shore erzielt. Bevorzugt ist das Andockelement materialeinheitlich und einstückig ausgebildet.

Um einer Bedienperson, insbesondere bei schlechten Sichtverhältnissen das Einführen der Saugkugel in das erfindungsgemäße Andockelement zu erleichtern, weist dieses, vorzugsweise am trichterförmigen Abschnitt einen fluoreszierenden, phosphoreszierenden oder reflektierenden Bereich auf.

Besonders bevorzugt ist ein radial umlaufender reflektierender Streifen, der beispielsweise aufgeklebt oder mittels einer speziellen Farbe aufgetragen ist. Denkbar ist auch, das Andockelement zumindest teilweise mit einer Leuchtfarbe, insbesondere einer Nachtleuchtfarbe zu versehen.

Die Erfindung wird nachfolgend mit Bezug auf die begleitenden Zeichnungen anhand einer besonders bevorzugten Ausführungsform beispielhaft erläutert. Dabei zeigt:
- Fig.1: eine frontale Darstellung eines Andockelements und
- Fig.2: eine perspektivische Darstellung eines Andockelements.

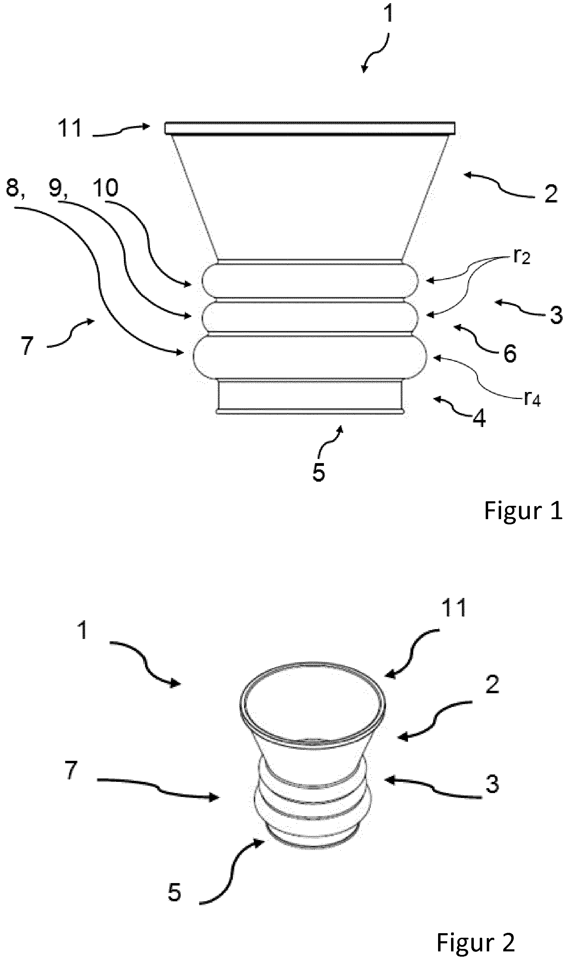

Gemäß den Figuren 1 und 2 weist ein Andockelement 1 einen trichterförmigen Abschnitt 2 und einen zylinderförmigen Abschnitt 3 auf. Der zylinderförmigen Abschnitt 3 dient dazu, das Andockelement 1 mit einem Leitungsende, beispielsweise einer Rohrleitung, zu verbinden, wobei das Leitungsende zumindest teilweise stirnseitig in den Abschnitt 3 eingeführt ist. Im Bereich des zylinderförmigen Teilabschnitts 4 ist ein Befestigungsmittel, beispielsweise ein Schlauchschelle (nicht in der Figur abgebildet), vorzusehen, das das Andockelement 1 am Leitungsende formschlüssig haltert. Der stirnseitig angeformte, radial umlaufende Kragen 5 sichert das Befestigungsmittel gegen ein Abrutschen.

Im Bereich des zylinderförmigen Teilabschnitts 6 ist ein Faltenbalg 7 mit drei Falten 8, 9, 10 ausgebildet. Der Faltenbalg weist zwei Falten 9, 10 mit Faltentälern mit einem Radius r₁ und Faltenbergen mit einem Radius r₂ und eine Falte 8 mit einem Faltental mit einem Radius r₃ und einem Faltenberg mit einem Radius r₄ auf. Für die Radien r₁ bis r₄ gilt dabei, r₁ ist gleich oder ungleich r₃ und r₂ ist kleiner r₄. Durch den größeren Radius r₄ der Falte 8 ist das Andockelement 1 in dem unteren Teilabschnitt 6 weicher und damit radial und winkelmäßig beweglicher. Gleichzeitig bleibt die axiale Beweglichkeit gegenüber einem Balg mit drei gleichen Faltenradien nahezu unverändert.

Dem zylinderförmigen Teilabschnitt 6 folgt der trichterförmigen Abschnitt 2, in den zur Herstellung einer Rohrleitungsverbindung stirnseitig ein mit dem Trichter 2 korrespondierendes, in der Regel sphärisch ausgebildetes Andockelement einzuführen ist. Das sphärisch ausgebildete Andockelement ist in der Regel eine an einem (Deichsel-) Saugarm oder Saugschlauch ausgebildete, Saugkugel
Der Trichter 2 weist einen radial umlaufenden Kragen 11 auf. Der Kragen dient zur Versteifung und zum Schutz, insbesondere gegen ein Einreißen, des am stärksten beanspruchten oberen Trichterrandes. Das erfindungsgemäße Andockelement hat vorzugsweise genormte Trichternennweiten, nämlich 150, 200 oder 250 mm. Die vorliegende Erfindung eignet sich insbesondere zur Herstellung einer lösbaren Leitungsverbindung zwischen einem stationären oder mobilen Speicher und einem Tankwagen oder Tank zum Vakuum-Umschlag von fließfähigen Medien, insbesondere von Gülle.

### Bezugszeichenliste:

- 1: Andockelement
- 2: trichterförmiger Abschnitt
- 3: zylinderförmiger Abschnitt
- 4: zylinderförmiger Teilabschnitts
- 5: Kragen
- 6: zylinderförmiger Teilabschnitts
- 7: Faltenbalg
- 8, 9, 10: Falten
- 11: Kragen

## Patentansprüche

1. Andockelement (1) aus einem gummielastischen Werkstoff mit einem trichterförmigen Abschnitt (2) und einem zylinderförmigen Abschnitt (3) zur Herstellung einer lösbaren Leitungsverbindung, wobei ein zylinderförmiger Teilabschnitt (4) zumindest teilweise an einem Leitungsende ausbildbar oder an diesem befestigbar ist, und ein zylinderförmiger Teilabschnitt (6) einen Faltenbalg (7) mit zumindest zwei Falten (8, 9, 10) mit Faltentälern und Faltenbergen, aufweist, und wobei dem zylinderförmigen Abschnitt (3) der trichterförmige Abschnitt (2) folgt, in den stirnseitig ein mit dem Trichter (2) korrespondierendes, in der Regel sphärisch ausgebildetes Andockelement einführbar ist, **dadurch gekennzeichnet, dass** zumindest eine Falte (8, 9, 10) des Faltenbalges (7) eine Materialschwächung und/oder einen im Vergleich zu der anderen Falte (8, 9, 10) größeren Radius des Faltenbergs aufweist.

2. Andockelement nach Anspruch 1, **dadurch gekennzeichnet, dass** der gummielastische Werkstoff materialeinheitlich und einstückig ausgebildet ist.

3. Andockelement nach Anspruch 1 oder 2, **dadurch gekennzeichnet, dass** der Trichter (2) einen stirnseitig angeformten, radial umlaufenden Kragen (11) aufweist.

4. Andockelement nach einem der vorstehenden Ansprüche, **dadurch gekennzeichnet, dass** der zylinderförmige Teilabschnitt (4) einen stirnseitig angeformten, radial umlaufenden Kragen 5 aufweist.

5. Andockelement nach einem der vorstehenden Ansprüche, **gekennzeichnet durch** einen, vorzugsweise radial umlaufenden fluoreszierenden, phosphoreszierenden oder reflektierenden Bereich.

6. Andockelement nach einem der vorstehenden Ansprüche, **dadurch gekennzeichnet, dass** der Faltenbalg (7) zwei Falten (9, 10) mit Faltentälern mit einem Radius r₁ und Faltenbergen mit einem Radius r₂ und eine Falte (8) mit einem Faltental mit einem Radius r₃ und einem Faltenberg mit einem Radius r₄ aufweist und dass r₂ kleiner r₄ ist.

7. Andockelement nach einem der vorstehenden Ansprüche, **dadurch gekennzeichnet, dass** der Faltenbalg (7) drei Falten (8, 9, 10) mit Faltentälern und Faltenbergen aufweist, und dass die Falte (8) im Vergleich zu den Falten (9, 10) eine Materialschwächung durch eine verminderte Wandstärke aufweist.

8. Andockelement nach einem der vorstehenden Ansprüche, **dadurch gekennzeichnet, dass** die Wandstärke im Bereich des trichterförmigen und zylinderförmigen Abschnitts (2, 3) zwischen 0,5 cm und 2,0 cm und im Bereich der Materialschwächung zwischen 0,25 und 1,0 cm beträgt.

9. Andockelement nach einem der vorstehenden Ansprüche, **dadurch gekennzeichnet, dass** der gummielastische Werkstoff ein Polyurethan mit einer Shore-Härte von > 80 Shore ist.

## Claims

1. Docking element (1) made of an elastomeric material and having a funnel-shaped portion (2) and a cylindrical portion (3) for establishing a releasable line connection, wherein a cylindrical sub-portion (4) can be fastened or formed, at least in part, on one end of the line, and a cylindrical sub-portion (6) has a folding bellows (7) having at least two folds (8, 9, 10) with troughs and peaks, and wherein the cylindrical portion (3) is followed by the funnel-shaped portion (2), into the end of which can be introduced a usually spherical docking element, which corresponds with the funnel (2), **characterized in that** at least one fold (8, 9, 10) of the folding bellows (7) has a material weakening and/or a fold-peak radius which is larger than that of the other fold (8, 9 10).

2. Docking element according to Claim 1, **characterized in that** the elastomeric material is of a single type, and formed in a single piece.

3. Docking element according to Claim 1 or 2, **characterized in that** the funnel (2) has a radially encircling end section collar (11) formed at its end.

4. Docking element according to one of the preceding claims, **characterized in that** the cylindrical sub-portion (4) has a radially encircling collar (5) formed at its end.

5. Docking element according to one of the preceding claims, **characterized by** a preferably radially encircling fluorescent, phosphorescent or reflective region.

6. Docking element according to one of the preceding claims, **characterized in that** the folding bellows (7) has two folds (9, 10) with troughs of a radius r₁ and peaks of a radius r₂ and a fold (8) with a trough of a radius r₃ and a peak of a radius r₄, and **in that** r₂ is smaller than r₄.

7. Docking element according to one of the preceding claims, **characterized in that** the folding bellows (7) has three folds (8, 9, 10) with troughs and peaks, and **in that** the fold (8) has a material weakening provided by way of a reduced wall thickness in comparison with the folds (9, 10).

8. Docking element according to one of the preceding claims, **characterized in that** the wall thickness in the region of the funnel-shaped and cylindrical portions (2, 3) is between 0.5 cm and 2.0 cm and in the region of the material weakening is between 0.25 and 1.0 cm.

9. Docking element according to one of the preceding claims, **characterized in that** the elastomeric material is a polyurethane having a Shore hardness of > 80 Shore.

## Revendications

1. Elément de liaison (1) en un matériau élastique de type caoutchouc avec une section en forme d'entonnoir (2) et une section cylindrique (3) pour la réalisation d'un assemblage de conduite démontable, dans lequel une section partielle cylindrique (4) peut être formée au moins partiellement à une extrémité de conduite ou peut être fixée à celle-ci, et une section partielle cylindrique (6) présente un soufflet plissé (7) comportant au moins deux plis (8, 9, 10) avec des vallées de pli et des crêtes de pli, et dans lequel la section cylindrique (3) est suivie par la section en forme d'entonnoir (2), dans laquelle un élément de liaison correspondant à l'entonnoir (2), de forme généralement sphérique, peut être introduit du côté frontal, **caractérisé en ce qu'**au moins un pli (8, 9, 10) du soufflet plissé (7) présente un affaiblissement de matière et/ou un plus grand rayon de la crête de pli par comparaison avec l'autre pli (8, 9, 10).

2. Elément de liaison selon la revendication 1, **caractérisé en ce que** le matériau élastique de type caoutchouc est réalisé en une seule pièce et en une seule matière.

3. Elément de liaison selon la revendication 1 ou 2, **caractérisé en ce que** l'entonnoir (2) présente un collet radialement périphérique (11), formé du côté frontal.

4. Elément de liaison selon l'une quelconque des revendications précédentes, **caractérisé en ce que** la section partielle cylindrique (4) présente un collet radialement périphérique (5) formé du côté frontal.

5. Elément de liaison selon l'une quelconque des revendications précédentes, **caractérisé par** une région fluorescente, phosphorescente ou réfléchissante, de préférence radialement périphérique.

6. Elément de liaison selon l'une quelconque des revendications précédentes, **caractérisé en ce que** le soufflet plissé (7) présente deux plis (9, 10) avec des vallées de pli avec un rayon r₁ et des crêtes de pli avec un rayon r₂ et un pli (8) avec une vallée de pli avec un rayon r₃ et une crête de pli avec un rayon r₄ et **en ce que** r₂ est plus petit que r₄.

7. Elément de liaison selon l'une quelconque des revendications précédentes, **caractérisé en ce que** le soufflet plissé (7) présente trois plis (8, 9, 10) avec des vallées de pli et des crêtes de pli, et **en ce que** le pli (8) présente, par comparaison avec les plis (9, 10), un affaiblissement de matière produit par une épaisseur de paroi réduite.

8. Elément de liaison selon l'une quelconque des revendications précédentes, **caractérisé en ce que** l'épaisseur de paroi est comprise dans la région de la section en forme d'entonnoir et de la section cylindrique (2, 3) entre 0,5 cm et 2,0 cm et dans la région de l'affaiblissement de matière entre 0,25 cm et 1,0 cm.

9. Elément de liaison selon l'une quelconque des revendications précédentes, **caractérisé en ce que** le matériau élastique de type caoutchouc est un polyuréthane avec une dureté Shore de > 80 Shore.
